# FASCICULE DE BREVET EUROPEEN

(11) **EP 0 902 037 B1**
(45) Date de publication et mention de la délivrance du brevet: **23.07.2003**
(21) Numéro de dépôt: 98402209.5
(22) Date de dépôt: 08.09.1998
(51) Int. Cl.: C08B 30/12, D21H 17/29, C08B 31/12

(54) **Procédé de transformation de matières amylacées**
Verfahren zur Modifizierung von stärkehaltigen Materialien
Process for modifying amylaceous materials

(30) Priorité: 12.09.1997 FR 9711383
(43) Date de publication de la demande: 17.03.1999
(73) Titulaire: Roquette Frères, 62136 Lestrem (FR)
(72) Inventeur: Fuertes, Patrick, 59130 Lambersart (FR); Lambin, Anne, 59160 Lomme (FR)
(74) Mandataire: Boulinguiez, Didier

(56) Documents cités:
- DE-A- 1 517 085
- FR-A- 2 076 829
- US-A- 3 962 079
- US-A- 4 373 099
- US-A- 4 421 566

## Description

La présente invention a pour objet un procédé de transformation de matières amylacées comprenant une étape de fluidification chimique en phase sèche, étape menée en continu et selon des conditions opératoires particulières.

Elle vise également les matières amylacées transformées, obtenues selon ledit procédé, certaines desdites matières amylacées constituant par ailleurs de nouveaux produits industriels.

La présente invention concerne enfin les utilisations industrielles desdites matières amylacées, en particulier dans la fabrication de papier, d'adhésifs ou de produits gélifiés.

La transformation des matières amylacées implique la mise en oeuvre de moyens physiques, chimiques et/ou enzymatiques appropriés aux contraintes tant techniques, économiques que réglementaires, imposées par les différents secteurs industriels auxquels sont destinés ces produits amylacés. Ces secteurs sont extrêmement variés et incluent notamment les industries alimentaires, pharmaceutiques, cosmétologiques, chimiques, phytosanitaires, textiles, papetières ainsi que les domaines des emballages, des colles et adhésifs, des matériaux de construction ou de la protection de l'environnement.

En fonction de l'utilisation et des propriétés applicatives recherchées, la transformation de la matière amylacée peut être principalement basée sur un traitement unique ou, au contraire, imposer l'association de deux, ou plus, traitements de toutes natures, ceux-ci pouvant d'ailleurs être appliqués simultanément ou successivement.

Parmi les nombreux traitements applicables aux matières amylacées, les techniques de fluidification chimique suscitent, depuis plus d'un siècle, un réel intérêt auprès de nombreuses branches d'activité industrielle.

Par fluidification chimique, on entend ici toute opération consistant à soumettre un produit amylacé et ce, à une température généralement inférieure à 100°C, à l'action hydrolysante d'un agent chimique, par exemple un composé acide ou (per)oxydant, ledit agent pouvant être mis en oeuvre sous forme liquide, solide et/ou gazeuse. Ce type d'opération est effectuée dans des conditions telles que le produit fluidifié résultant présente, en regard du produit de départ, a) une solubilité à froid généralement non ou peu augmentée et b) une humidité non ou relativement peu modifiée, en tous cas maintenue supérieure à 6-7 %.

Cette définition distingue les techniques de fluidification chimique des techniques d'hydrolyse enzymatique, ces dernières utilisant des enzymes, des cocktails enzymatiques ou des microorganismes comme moyens uniques ou principaux de fluidification.

Elle les distingue également des traitements hydrolytiques de dextrinification ou, plus largement, de pyroconversion, lesquels impliquent, en pratique, l'application de températures très élevées, i.e se situant généralement entre 120 et 170°C, à des matières amylacées particulières, à savoir des amidons généralement préacidifiés, préséchés et maintenus, pendant la réaction, à des humidités au plus égales à 5 % environ.

De tels traitements de pyroconversion donnent naissance pour leur part à des produits (dextrines blanches ou jaunes, "british gums") particulièrement secs, pulvérulents et hygroscopiques dont la solubilité à froid est élevée, voire totale, en tous cas très significativement augmentée par rapport à la solubilité à froid de la matière amylacée de départ.

En regard de ces traitements de pyroconversion ou dextrinification, les techniques de fluidification chimique présentent généralement un certain nombre d'avantages techniques ou économiques liés aux conditions opératoires ou aux caractéristiques des produits à traiter et/ou obtenus, et en particulier :
- non obligation d'un préséchage de la matière amylacée de départ,
- utilisation de températures réactionnelles moins élevées,
- diminution des risques d'explosion,
- moindre solubilité de la matière traitée, d'où meilleure applicabilité de celle-ci à des modifications ultérieures, notamment effectuées en milieu aqueux.

Lorsqu'elles sont appliquées à des produits amylacés natifs, i.e. n'ayant pas encore subi de traitement physique, chimique et/ou enzymatique, les techniques de fluidification chimique permettent, en outre, de préparer des produits transformés présentant une gamme de propriétés physico-chimiques communément recherchées dans des domaines d'activité particulièrement variés comme par exemple les industries alimentaires, pharmaceutiques, papetières, textiles, les industries des colles et adhésifs ou celles des matériaux de construction.

De telles propriétés communes, obtenues par exemple par l'action hydrolysante d'acides minéraux (acides chlorhydrique, sulfurique, phosphorique, HCl gazeux) sont généralement liées à la diminution du poids moléculaire du produit obtenu et consistent notamment en :
- une viscosité intrinsèque et une viscosité à chaud diminuées, la viscosité à chaud pouvant être appréciée par la mesure de la fluidité dans l'eau ("Water Fluidity" ou WF)
- une teneur en sucres réducteurs augmentée,
- une solubilité à froid non significativement modifiée,
- une solubilité à chaud augmentée, et
- une force de gel ("gel strength") et une filmogénéité ("film strength") augmentées.

L'ensemble de ces propriétés sont largement décrites par :
- O.B/ WURZBURG dans "Modified Starches : Properties and uses - Chapter 2, pp 17-40, CRC Press, Inc. 1986"
- R.G. ROHWER et al. dans "STARCH, 2nd ed. - Chapter XVII, pp 529-541, Academic Press, Inc. 1984", et
- J.A. RADLEY dans "Starch Production Technology - Chapter 20, pp 449-457, Applied Science Publishers Ltd, 1970".

L'un des principaux avantages technico-économiques des produits amylacés fluidifiés chimiquement consiste en leur aptitude à être mis en oeuvre et traités, notamment en leur aptitude à être cuits et gélifiés, à des matières sèches très élevées. Ceci du fait de leur viscosité largement abaissée en regard de produits natifs. Cette aptitude se traduit par des gains d'énergie (moindres volumes d'eau à éliminer) et des avantages technologiques largement mis à profit industriellement, par exemple dans la fabrication de gommes et produits gélifiés alimentaires, le surfaçage et le couchage du papier, l'encollage et l'apprêtage textile ou la préparation d'adhésifs pour plaques de plâtre et carton ondulé, comme décrit dans les références de WURZBURG, de ROHWER et de RADLEY précédemment citées.

Un autre avantage des techniques de fluidification chimique, y compris par voie acide ou oxydative, consiste en la possibilité de les associer à d'autres types de modification, en particulier à des réactions d'éthérification ou d'estérification. Ainsi, dans le cadre de la transformation de matières amylacées, une étape de fluidification chimique peut être précédée, suivie et/ou menée en même temps que d'autres modifications chimiques, comme par exemple :
- une réaction d'hydroxypropylation comme décrit par K.M. CHUNG et al. dans "Die Stärke, 43, Nr 11, pp 441-446, 1991",
- une réaction d'hydroxyéthylation comme décrit dans le brevet US 5,362,868,
- une réaction de cationisation comme décrit dans les brevets US 4,373,099, US 4,097,427, US 3,654,263 et US 4,421,566.

Les avantages précédemment rappelés des méthodes de fluidification chimique et des produits en découlant sont , en général, obtenus indépendamment du fait que lesdites méthodes sont effectuées en milieu aqueux ou, au contraire, en phase sèche.

Par phase sèche, on entend ici une fluidification effectuée au sein d'un mélange réactionnel (amylacé y compris) dont l'humidité est en pratique inférieure à 25 %, se situant préférentiellement entre 8 et 22 %. Les méthodes en milieu aqueux impliquent pour leur part un milieu réactionnel beaucoup plus dilué, avec mise en oeuvre d'un lait d'amidon présentant une matière sèche ne dépassant généralement pas 35 à 40 %.

Ces méthodes de fluidification en milieu aqueux restent largement utilisées industriellement dans le cadre de la transformation des matières amylacées. Cependant, elles impliquent la mise en oeuvre d'une étape supplémentaire de filtration qui présente l'inconvénient d'occasionner des pertes substantielles en matières solubles, principalement en granules d'amylacé abîmés, en molécules d'amylacé solubilisé et en sels générés lors de la neutralisation préalable de l'amylacé fluidifié. Ceci se traduit à la fois par une diminution des rendements en matières amylacées fluidifiées et par une augmentation de la charge polluante des effluents.

En outre, les méthodes de fluidification chimique effectuées en milieu aqueux ne permettent pas toujours, en pratique, d'obtenir dans des délais courts (1 à 3 heures par exemple) des amylacés natifs ou modifiés suffisamment hydrolysés pour présenter une fluidité dans l'eau (WF) supérieure à 55, se situant notamment entre 65 et 90. Des produits fluidifiés avec de telles valeurs de WF sont requis, par exemple, dans les opérations de surfaçage du papier ou d'encollage textile.

Les inconvénients précités ont contribué, notamment depuis une trentaine d'années, à la recherche et à la mise au point de techniques de fluidification chimique en phase sèche. Ainsi, les brevets US 3,479,220 et US 3,692,581 décrivent un procédé de fluidification chimique de matières amylacées (amidons, farines) par mise en contact, à température ambiante ( 25°C), de ces matières avec un acide minéral concentré mis sur un support inerte sec et finement divisé. La mise en oeuvre concomitante de fluorure d'hydrogène, décrite spécifiquement dans le brevet US 3,692,581, permet d'accélérer quelque peu la réaction d'hydrolyse. Malgré ce perfectionnement, les durées réactionnelles restent particulièrement longues, i.e. de l'ordre de 1 à plusieurs jours et les auteurs n'envisagent pas spécialement d'augmenter la température réactionnelle en vue de ramener ces durées à des valeurs exploitables industriellement.

Le brevet FR 1.553.744 décrit un procédé d'hydrolyse de l'amidon pendant lequel un mélange amidon /acide inorganique / amide hydrosoluble est maintenu à l'état fluidisé par l'action d'un gaz ascendant. Malgrè cette fluidisation, laquelle favorise les transferts de chaleur et l'homogénéité du système, et des taux d'introduction élevés en agent hydrolytique (0,5 à 20 % /amidon), il apparaît à la lecture de ce document, que l'obtention de produits suffisamment hydrolysés dans un délai de trente minutes à 3 heures (délai qualifié de "raisonnable" dans ce document) impose la mise en oeuvre de températures élevées, comprises entre 110 et 140°C. En outre, le mélange de départ est préséché jusqu'à une teneur faible en humidité ( 8 %) en vue de son passage sur lit fluidisé.

Le brevet EP 041.316 décrit un procédé général de modification chimique de l'amidon consistant, lorsqu'il est appliqué en phase sèche, à préparer un mélange amidon/agent de modification de sorte que ledit mélange présente une humidité de 15 à 25 %, se situant préférentiellement entre 17 et 19 %, et à soumettre ledit mélange à l'action d'un rayonnement à ultra-haute fréquence de manière à modifier l'amidon. Ce document ne détaille aucun exemple de fluidification chimique d'une matière amylacée, y compris en phase sèche. La lecture de ce document montre qu'en pratique, la mise en oeuvre du rayonnement à ultra-haute fréquence s'accompagne d'une durée de réaction extrêmement courte, à savoir au plus égale à 5 minutes, souvent inférieure ou égale à 1 minute (cf colonne 3, 1. 15-21 brevet EP 041.316-B1).

Les exemples de modifications chimiques en phase sèche décrits dans ce brevet concernent la cationisation, la carboxyméthylation ou la cationisation/phosphatation d'un amidon de maïs au sein d'un mélange réactionnel étalé de manière uniforme et sur une épaisseur faible (3 cm) sur une bande transporteuse qui traverse rapidement un four à radiations UHF. Les dimensions et par là même la fréquence (2450 MH_{z}) de ce four doivent être adaptées au traitement de l'amidon. Malgré un temps de séjour très court au sein dudit four, calculé à 1 minute 15 secondes, ce mélange subit une déshydratation importante, de l'ordre de 3 ou 6 % dans l'absolu soit, par rapport à l'humidité initiale dudit mélange (15 ou 18 %), une perte en eau de 20 à 33,3 %.

Le brevet EP 710.670 décrit un procédé de modification chimique en continu selon lequel une poudre d'amidon et un agent de modification, par exemple un agent hydrolytique ou un agent d'alkylation, sont introduits simultanément dans un turboréacteur thermorégulé comportant une hélice tournant à 300-1500 tours/minute. Ce dispositif permet, quasi-instantanément, de créer, par centrifugation, une couche fluide, fine, dynamique et hautement turbulente d'un mélange intime entre les particules d'amidon et l'agent chimique.

Avec un tel dispositif, la modification chimique de l'amidon s'effectue dans des durées particulièrement courtes, de l'ordre de une minute ou inférieure à une minute. Le temps de séjour de l'amidon dans le turboréacteur peut notamment être de l'ordre de 30 secondes seulement, comme décrit au niveau de l'exemple 1 dudit brevet qui envisage l'hydrolyse à 50°C d'un amidon de maïs par de l'acide chlorhydrique. De telles durées de réaction impliquent que l'ensemble des paramètres opératoires (température réactionnelle, vitesse de l'hélice, taux de réactifs) puissent être parfaitement prédéterminés, mesurés et maîtrisés sous peine d'obtenir un produit transformé ne correspondant pas au cahier des charges établi.

La demande de brevet WO 97/13788 décrit, en termes généraux, un procédé de fluidification chimique d'amidons effectué en phase sèche et en continu, impliquant la mise en oeuvre obligatoire d'un réacteur de type piston ("plug flow reactor"). Ce réacteur est décrit comme devant permettre l'obtention d'un produit transformé substantiellement homogène, contrairement à un réacteur agité qui favorise l'hétérogénéité des temps de séjour et donc des niveaux de transformation des particules amylacées.

Cependant, aucun exemple précis de préparation d'un amidon fluidifié n'est réellement détaillé dans ce document.

En outre, les considérations générales de la description montrent qu'en pratique, une exploitation industrielle efficace dudit procédé nécessite, pour le moins :
- l'utilisation, avant et pendant fluidification, d'un amidon présentant une humidité de 10 à 13 %,
- le préséchage de l'amidon puis son traitement hydrolytique, à des températures comprises entre 38 et 60° C (100-140°F), en tous cas au plus égales à 77°C (170°F),
- le transport pneumatique de l'amidon jusqu'à l'enceinte réactionnelle (réacteur piston),
- l"'injection" de l'agent hydrolytique dans le flux d'air convoyant l'amidon non encore fluidifié jusqu'au réacteur piston,
- des temps de séjour, dans le réacteur piston, de l'ordre de 1 à 4 heures, en tous cas supérieurs à 0,5 heure, et
- un réacteur piston de géométrie déterminée (angle conique de 65-75°, rapport hauteur/diamètre > 2). Ces deux dernières contraintes (temps de séjour, géométrie du réacteur) font que, pour obtenir des capacités de production industriellement rentables, le volume et la hauteur du réacteur piston entraînent des problèmes technologiques, en particulier de mauvais écoulement de la matière amylacée. En effet, la pression qui s'exerce en bas du réacteur devient très élevée (plusieurs bars) et entraîne ou favorise le mottage de la matière dont l'écoulement est considérablement perturbé.

Il a désormais été trouvé qu'il était possible, dans le cadre général de la transformation des matières amylacées de disposer d'un procédé de fluidification chimique desdites matières qui soit à la fois simple, rapide et performant.

La Société demanderesse a notamment constaté qu'il était tout à fait possible de fluidifier efficacement et de manière continue des matières amylacées de toutes origines, natures et destinations et ce, dans des laps de temps réactionnels relativement courts sans pour cela faire obligatoirement appel à :
- des dispositifs/procédés de (pré)séchage ou de fluidification spécifiques, complexes et/ou coûteux dans leur conception, leur mise en oeuvre ou leur contrôle,
- des gammes de températures réactionnelles ou de quantités d'agent chimique hydrolytique supérieures à celles rencontrées le plus souvent dans l'art antérieur.

De manière plus précise, la présente invention a pour objet un procédé de transformation d'une matière amylacée comprenant une étape de fluidification chimique consistant à soumettre, en phase sèche et dans un réacteur apte à fonctionner en continu, une matière amylacée à l'action hydrolysante d'un agent chimique, ce procédé étant caractérisé par le fait que :
- le temps de séjour de la matière amylacée dans le réacteur de fluidification est supérieur à 5 minutes et inférieur à 30 minutes,
- la température au sein dudit réacteur est supérieure à 60°C et inférieure à 100°C environ.

Selon une première variante du procédé selon l'invention, le temps de séjour de la matière amylacée dans le réacteur de fluidification se situe entre 6 et 28 minutes et la température au sein dudit réacteur se situe entre 65 et 90°C.

De manière avantageuse, le temps de séjour de la matière amylacée dans le réacteur de fluidification se situe entre 6 et 25 minutes.

Selon une autre variante préférentielle, la température au sein du réacteur de fluidification se situe entre 65 et 85°C.

Un premier intérêt industriel du procédé de transformation de matières amylacées selon l'invention est de prévoir, lors de l'étape proprement dite de fluidification chimique, des durées réactionnelles relativement courtes, illustrées par des temps de séjour de la matière amylacée dans le réacteur de fluidification inférieurs à 30 minutes.

Ainsi, dans le cadre d'opérations menées en continu, le volume de matière amylacée en cours de fluidification dans le réacteur à un moment donné est limité par rapport à une technologie prévoyant des temps de séjour significativement plus importants comme décrits par exemple dans la demande de brevet WO 97/13788 précitée.

En suite de quoi, dans l'éventualité d'une dérive quelconque de l'opération de fluidification lors de la mise en oeuvre du procédé selon l'invention, en particulier dans le cas où, pour une raison donnée, les matières amylacées auraient été fluidifiées au-delà du degré souhaité, les volumes de produits non satisfaisants et devant être déclassés seraient fortement diminués par rapport à ceux qui, dans le même cas, découleraient d'une technologie de fluidification à temps de séjour (relativement) élevé.

Ceci constitue un avantage économique et industriel indiscutable.

D'un autre côté, les temps de séjour prévus conformément à l'invention sont suffisamment importants (> 5 minutes) pour ne pas impliquer obligatoirement, même si elle peut être prévue, la mise en oeuvre supplémentaire de dispositifs très spécifiques nécessaires à une réaction de fluidification qui soit à la fois ultra rapide ou quasi instantanée, homogène et contrôlée. De tels dispositifs sont, par exemple, décrits dans les brevets précités EP 041.316 (dispositif à rayonnement UHF) et EP 710.670 (turbo réacteur).

Comme déjà indiqué, l'étape de fluidification conforme à la présente invention présente également comme intérêt de pouvoir être menée sur des dispositifs non spécifiques et simples de mise en oeuvre, et notamment sur des réacteurs de géométrie, dimensions et modes de fonctionnement très divers.

Par "réacteurs" on entend ici aussi bien, en particulier, les réacteurs de type piston, lesquels ne sont pas exclus dans le cadre de la présente invention, que des réacteurs agités ou autres enceintes de type mélangeur, permettant l'homogénéisation plus ou moins poussée de la matière en cours de fluidification. Et il est remarquable de noter que l'étape de fluidification conforme à l'invention peut avantageusement être conduite, comme il sera décrit par ailleurs, au sein d'un simple mélangeur/réchauffeur à socs apte à fonctionner en continu tel que ceux commercialisés sous la marque "LODIGE".

Par ailleurs, grâce aux temps de séjour de courtes durées prévues conformément à la présente invention, les volumes réactionnels nécessaires pour atteindre une production donnée sont significativement diminués et rendent beaucoup plus aisée l'utilisation de réacteurs piston. La taille des équipements, notamment leur hauteur, étant réduite, la pression exercée sur la matière amylacée en bas de réacteur est également réduite ; ce qui limite considérablement les problèmes de mottage.

Un autre intérêt industriel du procédé de transformation de matières amylacées selon l'invention est de comprendre une étape de fluidification chimique qui peut être aisément associée, si cela est souhaité, à une ou plusieurs autres opérations de modification chimique et/ou physique des matières amylacées, opération(s) pouvant par ailleurs être menée(s) antérieurement, postérieurement ou simultanément à ladite étape de fluidification.

La Société Demanderesse a notamment constaté que l'étape de fluidification conforme à l'invention pouvait non seulement être appliquée à des matières amylacées de natures extrêmement diverses, y compris celles déjà modifiées chimiquement et/ou physiquement, mais encore constituer une étape préalable ou concomitante à une ou plusieurs autres étapes de modification des matières amylacées.

Par "matière amylacée" au sens de la présente invention, on entend l'ensemble des amidons natifs, d'origine naturelle ou hybride, y compris ceux issus de mutations ou manipulations génétiques, ainsi que l'ensemble des amidons modifiés issus de la modification chimique et/ou physique, en une ou plusieurs étapes, desdits amidons natifs. Les amidons, natifs ou modifiés, peuvent notamment être issus de pomme de terre, de pomme de terre à haute teneur en amylopectine (pomme de terre waxy), de maïs, de blé, de maïs à haute teneur en amylopectine (maïs waxy), de maïs à haute teneur en amylose, de riz, de pois ou de manioc, des coupes ou fractions qui peuvent être faites ou obtenues telles que l'amylose, l'amylopectine, les coupes granulométriques connues de l'homme de l'art sous les vocables d'amidon de blé "A" et amidon de blé "B", et les mélanges quelconques d'au moins deux quelconques des produits susmentionnés, par exemple un mélange d'au moins un amidon de tubercule (fécule de pomme de terre notamment) et d'au moins un amidon de céréale (amidon de blé "A", blé "B", maïs, maïs waxy notamment). Les matières amylacées utilisables selon l'invention peuvent également consister en des farines ou autres mélanges contenant amidon(s) et protéine(s) végétale(s), le composant "amidon(s)" étant majoritaire, ainsi que l'ensemble des produits issus de la modification chimique et/ou physique, en une ou plusieurs étapes, desdites farines et desdits mélanges.

Lorsque, dans le cadre de l'invention, on fait appel à un produit modifié chimiquement en tant que matière amylacée destinée à être fluidifiée, celui-ci est notamment choisi dans le groupe comprenant les amidons et farines modifié(e)s chimiquement par l'une, au mois, des techniques connues d'éthérification, d'estérification, de sulfonation, d'oxydation ou de plastification, en particulier de cationisation, d'hydroxyalkylation ou d'acétylation.

En suite de quoi, selon une variante, le procédé de transformation de matières amylacées selon l'invention est caractérisé en ce que la matière amylacée soumise à l'étape de fluidification chimique est choisi parmi les amidons natifs et les farines ainsi que les produits résultant de l'éthérification, de l'estérification, de la sulfonation, de l'oxydation et/ou de la plastification, et en particulier de la cationisation, de l'hydroxyalkylation ou de l'acétylation, desdits amidons et desdites farines, ainsi que les mélanges quelconques d'au moins deux quelconques desdits produits.

La Société demanderesse a notamment constaté que la matière amylacée soumise à fluidification pouvait avantageusement être constituée d'un amidon cationique.

De tels produits peuvent être préparés par toute technique connue, menée en milieu aqueux, en milieu solvant ou en phase sèche, apte à permettre à un ou plusieurs groupement(s) azotés de nature électropositive de se fixer sur l'amidon. Lesdits groupements azotés peuvent notamment renfermer au moins un atome d'azote tertiaire ou quaternaire.

Les amidons cationiques utilisables selon l'invention présentent un taux d'azote fixé non limitatif, généralement compris entre 0,04 et 2,0 %, exprimé par rapport au poids sec d'amidon. Ces produits peuvent d'ailleurs être de nature "polycationique" comme ceux décrits, par exemple, dans les brevets EP 406.837 et US 4.492.536. Ils peuvent également être de nature "amphotère" dès lors qu'ils sont également porteurs de groupements anioniques tels que des groupements phosphate, (sulfo)succinate, alkylsulfonate, sulfate ou alkylcarboxylate.

D'une manière surprenante et inattendue, la Société Demanderesse a constaté que l'étape de fluidification chimique prévue conformément à la présente invention, pouvait parfaitement être appliquée industriellement et ce, même quand l'amidon cationique soumis à fluidification présentait des caractéristiques devant a priori poser des problèmes de maîtrise de la viscosité de la matière (amidon cationique de base blé et/ou contenant des taux relativement élevés en résidus de cationisation) et/ou de mottage de la matière (amidon cationique présentant une humidité supérieure à 10 % environ).

Dans le cadre de la présente invention, on peut mettre en oeuvre, en tant que moyens de fluidification des matières amylacées, des agents chimiques de natures et de concentrations très variées, tels que ceux utilisés conformément à l'un et/ou l'autre des documents précités de l'art antérieur. Ces agents chimiques peuvent notamment être choisis parmi les produits à activité hydrolysante listés page 4, lignes 5 à 18 de la demande WO 97/13788 précitée.

Ces agents peuvent notamment consister en des acides minéraux ou organiques ou des agents (per)oxydants, ces produits pouvant être utilisés sous forme liquide, solide et/ou gazeuze.

Comme indiqué précédemment, les temps de séjour de faibles durées prévus conformément à la présente invention en ce qui concerne l'étape de fluidification, n'obligent cependant aucunement la mise en oeuvre de quantités d'agent chimique à activité hydrolysante supérieures à celles rencontrées classiquement dans l'art antérieur. En suite de quoi, on mettra généralement en oeuvre de l'ordre de 0,01 à 2 %, de préférence de 0,05 à 1,0 % environ, d'agent chimique à activité hydrolysante, exprimé en sec/sec par rapport au poids de la matière amylacée devant être fluidifiée.

Selon un mode particulièrement simple, efficace et peu coûteux d'exploitation du procédé objet de l'invention, celui-ci est caractérisé par le fait que la matière amylacée est soumise, en vue de sa fluidification, à l'action hydrolysante d'un acide minéral, en particulier de l'acide chlorhydrique ou de l'acide sulfurique, ledit acide étant introduit à raison de 0,01 à 0,4 % en poids exprimé en sec/sec par rapport au poids de matière amylacée.

Les teneurs en eau de la matière amylacée 1) soumise à fluidification et 2) en cours de fluidification, ne constituent pas des paramètres critiques du procédé de transformation selon l'invention.

Selon une variante préférentielle du procédé de transformation ici revendiqué, la matière amylacée présente constamment, pendant l'étape de fluidification proprement dite, une teneur en eau comprise entre 10 et 15 % environ.

Comme indiqué précédemment, ladite étape de fluidification peut également être menée simultanément ou antérieurement à une ou plusieurs autres étapes quelconques de modification chimique et/ou physique de la matière amylacée.

De telles étapes, menées simultanément ou postérieurement à l'étape proprement dite de fluidification, peuvent notamment consister en la mise en oeuvre de l'une au moins des techniques de modification chimique citées ci-avant et applicables à des produits non encore fluidifiés. En suite de quoi, le procédé de transformation des matières amylacées selon l'invention dont les caractéristiques ont été décrites précédemment, peut en outre être caractérisé par le fait que, après et/ou pendant fluidification, la matière amylacée- est soumise à au moins une étape subséquente et/ou simultanée de modification chimique, en particulier d'éthérification, d'estérification, de sulfonation, d'oxydation ou de plastification et notamment de cationisation, d'hydroxyalkylation ou d'acétylation.

Selon une variante préférentielle dudit procédé, la matière amylacée est soumise, après fluidification, à une étape de cationisation.

A ce titre, la demanderesse a trouvé que l'on pouvait tout à fait avantageusement procéder d'abord à la fluidification en phase sèche de la matière amylacée conformément à la présente invention puis, immédiatement après ou non, à sa cationisation, en particulier en phase sèche.

Cet ordre de réactions, à savoir une fluidification suivie d'une cationisation, correspond à l'ordre inverse de celui qu'il serait logique de mettre en oeuvre puisque l'on sait que la fluidification, par nature, génère la formation de groupements réducteurs CH = 0 (hydrolyse des chaînes d'amidon), lesquels sont ensuite susceptibles de colorer plus ou moins fortement la matière lorsqu'ils sont mis en présence d'un agent alcalin comme c'est le cas lors de l'étape subséquente de cationisation.

A la connaissance de la société Demanderesse, un tel ordre de réaction, effectué en phase sèche, n'a jamais été expréssement décrit dans la littérature. Or, la mise en oeuvre pratique d'un tel concept apporte, comme l'a constaté la demanderesse, certains avantages industriels parmi lesquels :
- la possibilité de valider la viscosité des lots plus en amont du processus général de transformation, i.e. dès avant la cationisation,
- la possibilité de recycler plus facilement les lots de produits fluidifiés en cas de problème de viscosité (de tels lots n'ont pas encore subi l'étape de cationisation et peuvent alors être soumis à d'autres types de modification),
- la possibilité de mieux maîtriser l'acidité du milieu et les fluctuations de viscosité de la matière.

En suite de quoi la présente invention concerne également un nouveau procédé de transformation d'une matière amylacée caractérisé en ce qu'il comprend :
- une étape de fluidification, en phase sèche, de ladite matière, et
- une étape ultérieure de cationisation, en phase sèche, de la matière amylacée fluidifiée obtenue.

Il convient également d'insister à cet endroit de la description sur le fait que l'étape de fluidification chimique en phase sèche prévue conformément à la présente invention permet, lorsqu'elle est combinée (simultanément ou non) à une étape de cationisation, l'obtention, entre autres, de nouvelles matières amylacées cationiques, lesquelles peuvent être avantageusement utilisées dans les domaines de la papeterie (surfaçage/couchage du papier notamment) ou des colles et adhésifs (adhésifs pour plaques de plâtre et carton ondulé notamment).

Selon une première variante, ces matières amylacées cationiques sont caractérisées par le fait qu'elles présentent simultanément :
- une fluidité dans l'eau (WF) au moins égale à 65, notamment comprise entre 70 et 90, et
- un taux d'azote fixé au moins égal à 0,30 % et inférieur à 0,50 %, notamment compris entre 0,30 et 0,48 %, exprimé par rapport au poids sec de ladite matière.

Selon une seconde variante, ces matières amylacées cationiques sont caractérisées par le fait qu'elles présentent simultanément :
- une fluidité dans l'eau (WF) au moins égale à 50, notamment comprise entre 65 et 90, et
- un taux d'azote fixé au moins égal à 0,04 % et au plus égal à 0,12 %, notamment compris entre 0,05 et 0,10 %, exprimé par rapport au poids sec de ladite matière amylacée.

De tels amidons fluidifiés faiblement cationisés, par exemple un amidon à base de maïs ou de pomme de terre présentant un taux d'azote fixé de 0,08 % % environ et une WF de 68 environ, sont avantageusement utilisables dans le domaine du surfaçage et du couchage du papier.

Selon une troisième variante, ces matières amylacées sont caractérisées par le fait qu'elles consistent en des amidons de blé ou de pomme de terre présentant simultanément :
- une fluidifité dans l'eau (WF) au moins égale à 65, notamment comprise entre 70 et 90, et
- un taux d'azote compris entre 0,20 et 2 % notamment compris entre 0,22 et 1 %.

De tels nouveaux produits cationiques fluidifiés, par exemple des amidons de blé cationiques fluidifiés présentant des valeurs de WF de 70 à 90 et des taux d'azote de 0,30-0,48%, sont susceptibles d'être obtenus par mise en oeuvre du procédé de transformation selon l'invention.

En suite de quoi ledit procédé constitue un nouveau moyen particulièrement simple, peu coûteux et performant, d'obtention de matières amylacées transformées (notamment fluidifiées, fluidifiées/cationisées, fluidifiées/hydroxypropylées) y compris de produits transformés nouveaux issus de matières amylacées natives, en particulier de blé et de pomme de terre, qui trouvent ainsi de nouvelles opportunités d'utilisation industrielle.

Les secteurs industriels intéressés par les matières amylacées conformes à la présente invention sont ceux auxquels sont généralement destinés les produits amylacés fluidifiés et qui ont été listés précédemment. Ces domaines d'utilisation concernent notamment les industries du papier, du textile, des colles et adhésifs, des matériaux de construction, des détergents, les industries alimentaires, pharmaceutiques et cosmétologiques. Ils concernent en particulier le surfaçage et le couchage du papier, l'encollage et l'apprêtage textile, la préparation d'adhésifs pour plaques de plâtre et carton ondulé, la préparation de gommes et produits gélifiés à usage alimentaire, pharmaceutique ou cosmétologique.

L'invention pourra être mieux comprise à l'aide des exemples qui suivent et qui font état de certains modes avantageux de préparation et d'utilisation des matières amylacées transformées selon l'invention.

### EXEMPLE COMPARATIF 1 : Essai de transformation d'une matière amylacée native mettant en oeuvre une étape de fluidification non conforme à la présente invention

Dans un mélangeur à haute vitesse, on introduit en continu et à température ambiante, un amidon natif de base maïs présentant une humidité de 13 % en poids à raison de 5 T/heure et, simultanément, une solution d'acide chlorhydrique dilué à 10 % à raison de 75 l/heure soit 0,13 % d'acide, exprimé en poids sec/poids sec d'amidon.

Le mélange acidifié est ensuite introduit, également en continu, dans un mélangeur réchauffeur pour atteindre une température d'environ 52°C.

Le mélange acidifié réchauffé est ensuite introduit, en continu, dans un réacteur statique calorifugé de type piston d'un volume de 25 m³. Le temps de séjour dans ledit réacteur est de 3 heures.

Après ce temps de contact, le produit hydrolysé obtenu est extrait en continu du réacteur et neutralisé avec une solution de carbonate de soude à 10 % jusqu'à un pH de 6,0 environ. Le produit est ensuite séché jusqu'à une humidité d'environ 13 %.

La viscosité du produit obtenu est appréciée régulièrement par la mesure de "fluidité dans l'eau" ("Water Fluidity" ou "WF") largement connue de l'homme de l'art.

Au cours de l'extraction, la viscosité mesurée du produit est extrêmement aléatoire et oscille entre des WF de 10 et 70.

Ces résultats montrent qu'il est particulièrement difficile d'obtenir dans ces conditions, et notamment pour un temps de séjour souhaité de 3 heures, un véritable effet piston sur un matériel industriel. Des prélèvements effectués à la sortie du réacteur confirment que le produit mottant s'écoule difficilement. Ceci entraîne des temps de séjour variables et donc des degrés d'hydrolyse plus ou moins aléatoires.

### EXEMPLE 2 : Transformation d'une matière amylacée native mettant en oeuvre une étape de fluidification conforme à la présente invention

Les conditions de cet essai sont identiques à celles décrites pour l'EXEMPLE 1 si ce n'est que :
- la température au sein du mélangeur réchauffeur est de 75°C environ,
- le temps de séjour de la matière amylacée dans ce réacteur est de 10 minutes environ,
- le mélangeur acidifié ainsi réchauffé est neutralisé directement, i.e sans passage dans le moindre réacteur statique.

La fluidité WF du produit obtenu est étonnamment stable durant l'essai, de l'ordre de 65-67, et correspond à l'objectif visé.

Ce produit se présente comme une poudre blanche, d'écoulement très satisfaisant.

### EXEMPLE 3 : Transformation d'une matière amylacée cationique mettant en oeuvre une étape de fluidification conforme à la présente invention

Dans un mélangeur à haute vitesse, on introduit en continu à raison de 3 T/heure et à température ambiante, un amidon de maïs cationique présentant une humidité de 12 % en poids et un taux d'azote fixé d'environ 0,16 %. Simultanément, on introduit une solution d'acide chlorhydrique à 9 % et ce, à raison de 60 l/heure.

Le mélange acidifié est ensuite introduit, également en continu, dans un mélangeur/réchauffeur. La température au sein de ce réacteur est de 80°C environ. Le temps de séjour de la matière amylacée dans ce réacteur est de 10 minutes environ. Le mélange acidifié ainsi réchauffé est neutralisé directement, i.e. sans passage dans le moindre réacteur statique, puis séché. La fluidité du produit obtenu est étonnamment stable durant l'essai. Sa valeur (WF 60) correspond à l'objectif visé.

Cet exemple confirme la possibilité de fluidifier une matière amylacée (native ou modifiée) de manière simple, rapide et homogène en faisant appel aux caractéristiques de temps de séjour et de température prévues pour l'étape de fluidification conforme au procédé de transformation selon l'invention.

### EXEMPLE 4 : Application de matières amylacées obtenues conformément à la présente invention au domaine du surfaçage du papier

L'amidon de maïs cationique fluidifié en phase sèche obtenu selon le présent EXEMPLE 3 a été testé en surfaçage du papier.

Dans un premier temps la stabilité à chaud de ce produit a été vérifiée par étude, à différentes températures, de la viscosité BROOKFIELD (vitesse de rotation : 100 tours/minute) d'une colle à 10 % de matière sèche (MS). Les résultats obtenus montrent une très grande stabilité de ce produit dont la viscosité augmente de façon régulière mais très limitée entre 80°C (viscosité BROOKFIELD = 59 m Pa.s ou centipoises) et 25°C (176 m PA.s).

Cette très grande stabilité a été confirmée par un test de stockage de 24h à 70°C à l'issue duquel le produit (colle à 10 % MS) n'a subi ni décantation notable, ni perte de viscosité ou coloration significatives.

Pour l'essai de surfaçage proprement dit, l'amidon cationique fluidifié a été mis sous forme de dispersion aqueuse présentant une MS de l'ordre de 12,5 % % qui a ensuite été soumise à un traitement thermique dans un cuiseur continu (3 minutes à 140°C).

On a ensuite évalué la qualité d'impression jet d'encre couleur d'un papier surfacé avec la colle ainsi obtenue. Le papier utilisé pour ce test est un papier sans bois de type impression/écriture présentant un grammage de 78 g/m₂, un taux de cendres de 24 % (450°C) et une porosité BENDTSEN de 1330 ml/minute.

La dépose de la colle sur ce papier s'est faite à un taux de 3,8 g/m2 et ce, par mise en oeuvre d'une coucheuse de laboratoire avec presse à coller ("size-press"). Le test d'impression se fait sur imprimante jet d'encre couleur de type "HP 560". Les papiers sont imprimés selon le programme informatisé du test IV intitulé "Paper Acceptance Criteria for HEWLETT PACKARD DESKJET,500 C".

Dans le cas présent on a obtenu avec l'amidon cationique fluidifié résultant de l'EXEMPLE 3 ci-dessus une très bonne qualité d'impression jet d'encre couleur, y compris pour le critère très sélectif de la qualité de l'impression pour les couleurs noire et jaune et notamment le contraste et la netteté des contours des zones ainsi colorées et le degré de fusion éventuelle des colorants noir et jaune ("bleeding").

Une impression jet d'encre couleur de même qualité a par ailleurs été observée, dans les mêmes conditions, avec l'amidon fluidifié non cationique obtenu selon l'EXEMPLE 2 ci-avant.

### EXEMPLE 5 : Transformation d'une matière amylacée mettant en oeuvre une étape de fluidification conforme à la présente invention.

Dans un mélangeur à haute vitesse, on introduit en continu et à température ambiante, un amidon natif à base de maïs présentant une humidité de 13% en poids à raison de 5t/heure et simultanément, une solution d'acide sulfurique dilué à 1,54% à raison de 850 l/heure, soit 0,30% d'acide exprimé en poids sec/poids sec d'amidon.

Le mélange acidifié est ensuite introduit, également en continu, dans un mélangeur réchauffeur pour atteindre une température d'environ 95°C.

Le temps de séjour de la matière amylacée dans ce réacteur est de 20 minutes environ.

Le mélange acidifié ainsi réchauffé est neutralisé directement, sans passage dans le moindre réacteur statique et séché.

La fluidité WF du produit obtenu est stable durant l'essai, de l'ordre de 66 WF et correspond à l'objectif visé.

Cet exemple montre que dans le cadre de la présente invention, on peut valablement soumettre une matière amylacée à l'action hydrolysante de l'acide sulfurique.

### EXEMPLE 6 : Les conditions de cet essai sont identiques à celles de l'exemple 3, si ce n'est que :

1) la matière amylacée cationique de départ consistait :
   - soit en un amidon de blé cationique présentant une humidité de 12% et un taux d'azote fixé d'environ 0,48%,
   - soit en une fécule de pomme de terre cationique présentant une humidité de 17% et un taux d'azote fixé de 0,64% environ.
2) l'objectif visé était, en termes de fluidification, d'atteindre une WF d'environ 72-75 pour ces deux produits.

Ledit objectif a été atteint sans problème particulier par augmentation du temps de séjour de quelques minutes en regard de celui appliqué pour l'EXEMPLE 3.

Et il est remarquable de constater que l'étape de fluidification conforme au procédé selon l'invention est applicable à des matières amylacées de natures très variées, y compris, comme dans le cas présent, à des matières amylacées propices à engendrer des problèmes industriels de maîtrise de viscosité (amidon de blé, notamment cationique) ou de mottage (fécule de pomme de terre, y compris cationique).

Ces problèmes industriels expliquent, au moins en partie, le fait que, à la connaissance de la Société Demanderesse, il n'a pas pu être jusqu'alors proposé sur le marché, d'amidons cationiques à base spécifiquement de blé ou de pomme de terre qui présentent une fluidité dans l'eau relativement élevée, à savoir au moins égale à 65, notamment comprise entre 70 et 90.

La Société Demanderesse a non seulement montré, comme décrit ci-avant, qu'il était possible d'obtenir, de manière simple et industrielle, de telles matières amylacées cationiques, mais encore elle a pu observer, lors de tests effectués selon le protocole décrit dans l'EXEMPLE 4, que de tels nouveaux produits industriels pouvaient valablement être utilisés pour le surfaçage du papier, en particulier en vue d'obtenir une bonne qualité d'impression jet d'encre couleur.

### EXEMPLE 7 : Les conditions de cet essai sont identiques à celles de l'EXEMPLE 3, si ce n'est que :

1) la matière amylacée soumise à l'étape de fluidification en phase sèche conforme à l'invention, consistait en un amidon de maïs natif,
2) l'objectif visé était de cationiser en phase sèche, l'amidon de maïs fluidifié ainsi obtenu.

La Société Demanderesse a trouvé que l'on pouvait tout à fait procéder d'abord à la fluidification en phase sèche dudit amidon de maïs, puis subséquemment à sa cationisation en phase sèche.

L'intérêt industriel de cet ordre de réactions a été rappelé précédemment. Dans le cas présent, le produit obtenu, i.e. "un amidon de maïs" fluidifié (WF ≈ 60) puis cationisé en phase sèche (azote fixé : 0,10%), s'est révélé n'être que très légèrement plus coloré que le produit cationisé puis fluidifié obtenu selon l'EXEMPLE 3, mais être tout aussi efficace que ce dernier dans son application en surfaçage papier, lors de tests effectués conformément à l'EXEMPLE 4.

Cet essai a confirmé que l'étape de fluidification conforme à l'invention pouvait être considérée comme un moyen universel de transformation des matières amylacées, applicable tant préalablement que subséquemment à une ou plusieurs autres étapes de modification, en particulier de cationisation, des matières amylacées.

## Revendications

1. Procédé de transformation d'une matière amylacée, comprenant une étape de fluidification chimique consistant à soumettre, en phase sèche et dans un réacteur apte à fonctionner en continu, une matière amylacée à l'action hydrolysante d'un agent chimique, ce procédé étant **caractérisé par le fait que** :
- l'étape de fluidification est effectuée au sein d'un mélange réactionnel dont l'humidité est inférieure à 25 %, de préférence entre 8 et 22 %,
- le temps de séjour de la matière amylacée dans le réacteur de fluidification est supérieur à 5 minutes et inférieur à 30 minutes, et
- la température au sein dudit réacteur est supérieure à 60°C et inférieure à 100°C.

2. Procédé selon la revendication 1, **caractérisé par le fait que** :
- le temps de séjour de la matière amylacée dans le réacteur de fluidification se situe entre 6 et 28 minutes, et
- la température au sein dudit réacteur se situe entre 65 et 90°C.

3. Procédé selon l'une ou l'autre des revendications 1 et 2, **caractérisé par le fait que** :
- le temps de séjour de la matière amylacée dans le réacteur de fluidification se situe entre 6 et 25 minutes et/ou
- la température au sein dudit réacteur se situe entre 65 et 85°C.

4. Procédé selon l'une quelconque des revendications 1 à 3, **caractérisé par le fait que** la matière amylacée soumise à l'étape de fluidification chimique est choisie parmi les amidons natifs, les farines, les produits résultant de l'éthérification, l'estérification, la sulfonation, l'oxydation et/ou la plastification, en particulier de la cationisation, l'hydroxyalkylation et/ou l'acétylation, desdits amidons et desdites farines, et les mélanges quelconques d'au moins deux quelconques desdits produits.

5. Procédé selon la revendication 4, **caractérisé par le fait que** la matière amylacée soumise à l'étape de fluidification consiste en un amidon cationique, éventuellement porteur conjointement de groupements anioniques.

6. Procédé selon l'une quelconque des revendications 1 à 5, **caractérisé par le fait que** la matière amylacée est soumise, en vue de sa fluidification, à l'action hydrolysante d'un acide minéral, en particulier de l'acide chlorhydrique ou de l'acide sulfurique, introduit à raison de 0,01 à 0,4 % en poids, exprimé en sec/sec par rapport au poids de matière amylacée.

7. Procédé selon l'une quelconque des revendications 1 à 6, **caractérisé par le fait que**, après et/ou pendant l'étape de fluidification, la matière amylacée est soumise à au moins une étape subséquente et/ou simultanée de modification chimique, en particulier d'éthérification, d'estérification, de sulfonation, d'oxydation ou de plastification, notamment de cationisation, d'hydroxyalkylation ou d'acétylation.

8. Procédé de transformation d'une matière amylacée **caractérisé par le fait qu'**il comprend :
- une étape de fluidification, en phase sèche, de ladite matière, et
- une étape ultérieure de cationisation, en phase sèche, de la matière amylacée ainsi fluidifiée.

9. Procédé selon l'une quelconque des revendications 1 à 8, **caractérisé par le fait que** :
- l'étape de fluidification est conduite de façon à ce que la fluidité dans l'eau (WF) du produit obtenu soit au moins égale à 65, de préférence comprise entre 70 et 90, et
- l'étape de cationisation est conduite de façon à ce que le taux d'azote fixé du produit obtenu soit au moins égal à 0,30 % et inférieur à 0,50 %, de préférence compris entre 0,30 et 0,48 %, par rapport au poids sec de la matière amylacée cationique obtenue.

10. Procédé selon l'une quelconque des revendications 1 à 8, **caractérisé par le fait que** :
- l'étape de fluidification est conduite de façon à ce que la fluidité dans l'eau (WF) du produit obtenu soit au moins égale à 50 environ, de préférence comprise entre 65 et 90, et
- l'étape de canonisation est conduite de façon à ce que le taux d'azote fixé du produit obtenu soit au moins égal à 0,04 % et au plus égal à 0,12 %, de préférence compris entre 0,05 et 0,10 %, par rapport au poids sec de la matière amylacée cationique obtenue.

11. Procédé selon l'une quelconque des revendications 1 à 8, **caractérisé par le fait que** la matière amylacée est un amidon de blé ou de pomme de terre et que :
- l'étape de fluidification est conduite de façon à ce que la fluidité dans l'eau (WF) du produit obtenu soit au moins égale à 65 environ, de préférence comprise entre 70 et 90, et
- l'étape de cationisation est conduite de façon à ce que le taux d'azote fixé du produit obtenu soit compris entre 0,20 % et 2 %, de préférence compris entre 0,22 et I %, par rapport au poids sec de la matière amylacée cationique obtenue.

## Patentansprüche

1. Verfahren zur Umwandlung einer Amylase-Masse, das eine chemische Fluidisierstufe umfasst, wobei man die Amylase-Masse in trockener Phase in einem kontinuierlich betriebenen Reaktor der Hydrolysierwirkung eines chemischen Agens unterzieht, wobei das Verfahren **dadurch gekennzeichnet ist, dass**
- die Fluidisierstufe mit einer Reaktionsmischung durchgeführt wird, deren Feuchtigkeit weniger als 25 und vorzugsweise 8 bis 22% beträgt,
- die Verweilzeit der Amylase-Masse im Fluidisierreaktor mehr als 5 und weniger als 30 min und
- die Temperatur im genannten Reaktor mehr als 60 und weniger als 100°C betragen.

2. Verfahren gemäß Anspruch 1,
**dadurch gekennzeichnet, dass**
- die Verweilzeit der Amylase-Masse im Fluidisierreaktor 6 bis 28 min und
- die Temperatur im genannten Reaktor 65 bis 90°C betragen.

3. Verfahren gemäß einem der Ansprüche 1 bis 2,
**dadurch gekennzeichnet, dass**
die Verweilzeit der Amylase-Masse im Fluidisierreaktor 6 bis 25 min und/oder
- die Temperatur im genannten Reaktor 65 bis 85°C betragen.

4. Verfahren gemäß einem der Ansprüche 1 bis 3,
**dadurch gekennzeichnet, dass**
die Amylase-Masse, die der chemischen Fluidisierstufe unterzogen wird, aus nativer Stärke, Mehlen, Produkten aus der Veretherung, Veresterung, Sulfonierung, Oxidation und/oder der Plastifizierung, insbesondere aus der Kationisierung, Hydroxyalkylierung und/oder der Acetylierung, der genannten Stärken und Mehle und aus jeden Mischungen aus mindestens 2 der genannten Produkte ausgewählt ist.

5. Verfahren gemäß Anspruch 4, **dadurch gekennzeichnet, dass** die Amylase-Masse, die aus einer kationischen Stärke besteht, die gegebenenfalls auch anionische Gruppierungen aufweist, der Fluidisierstufe unterzogen wird.

6. Verfahren gemäß einem der Ansprüche 1 bis 5, **dadurch gekennzeichnet, dass** die Amylase-Masse zur Fluidisierung der Hydrolysierwirkung einer Mineralsäure, insbesondere der Salz- oder Schwefelsäure, in einem Mengenanteil von 0,01 bis 0,4 Gew.%, ausgedrückt auf Trocken/Trocken-Basis, bezogen auf das Gewicht der Amylase-Masse, unterzogen wird.

7. Verfahren gemäß einem der Ansprüche 1 bis 6, **dadurch gekennzeichnet, dass** nach und/oder während der Fluidisierstufe die Amylase-Masse mindestens einer anschließenden und/oder gleichzeitigen chemischen Modifizierstufe, insbesondere einer Veretherung, Veresterung, Sulfonierung, Oxidation und/oder einer Plastifizierung, ganz besonders einer Kationisierung, Hydroxyalkylierung oder Acetylierung, unterzogen wird.

8. Verfahren zur Umwandlung einer Amylase-Masse, **dadurch gekennzeichnet, dass** es umfasst:
- eine Fluidisierstufe, in trockener Phase, der genannten Masse und
- eine Endstufe einer Kationisierung, in trockener Phase, der so fluidisierten Amylase-Masse.

9. Verfahren gemäß einem der Ansprüche 1 bis 8, **dadurch gekennzeichnet, dass:**
- die Fluidisierstufe so durchgeführt wird, dass die Fluidität in Wasser (WF) des erhaltenen Produkts mindestens 65 und vorzugsweise 70 bis 90 beträgt, und
- die Kationisierstufe so durchgeführt wird, dass der Gehalt an fixiertem Stickstoff des erhaltenen Produkts mindestens 0,30 und weniger als 0,50 und vorzugsweise 0,30 bis 0,48% beträgt, bezogen auf das Trockengewicht der erhaltenen kationischen Amylase-Masse.

10. Verfahren gemäß einem der Ansprüche 1 bis 8, **dadurch gekennzeichnet, dass:**
- die Fluidisierstufe so durchgeführt wird, dass die Fluidität in Wasser (WF) des erhaltenen Produkts mindestens ca. 50 und vorzugsweise 65 bis 90 beträgt, und
- die Kationisierstufe so durchgeführt wird, dass der Gehalt an fixiertem Stickstoff des erhaltenen Produkts mindestens 0,04 und höchstens 0,12 und vorzugsweise 0,05 bis 0,10% beträgt, bezogen auf das Trockengewicht der erhaltenen kationischen Amylase-Masse.

11. Verfahren gemäß einem der Ansprüche 1 bis 8, **dadurch gekennzeichnet, dass** die Amylase-Masse eine Weizen- oder Kartoffelstärke ist und dass:
- die Fluidisierstufe so durchgeführt wird, dass die Fluidität in Wasser (WF) des erhaltenen Produkts mindestens ca. 65 und vorzugsweise 70 bis 90 beträgt, und
- die Kationisierstufe so durchgeführt wird, dass der Gehalt an fixiertem Stickstoff des erhaltenen Produkts 0,20 bis 2 und vorzugsweise 0,22 bis 1% beträgt, bezogen auf das Trockengewicht der erhaltenen kationischen Amylase-Masse.

## Claims

1. A conversion process for a starchy material, including a chemical fluidification stage consisting in subjecting, in the dry phase and in a reactor suitable for continuous operation, a starchy material to the hydrolysing action of a chemical agent, wherein:
- the fluidification stage is carried out at the core of a reaction mix, the humidity of which is less than 25 %, preferably between 8 and 22 %,
- the dwell time of the starchy material in the fluidification reactor is more than 5 minutes and less than 30 minutes, and
- the temperature at the core of the said reactor is more than 60 °C and less than 100 °C.

2. A process in accordance with claim 1, wherein:
- the dwell time of the starchy material in the fluidification reactor is somewhere between 6 and 28 minutes, and
- the temperature at the core of the said reactor is somewhere beween 65 and 90° C

3. A process in accordance with claim 1 or claim 2, wherein:
- the dwell time of the starchy material in the fluidification reactor is somewhere between 6 and 25 minutes, and/or
- the temperature at the core of the said reactor is somewhere beween 65 and 85° C

4. A process in accordance with anyone of claims 1 to 3, wherein the starchy material subjected to the chemical fluidification stage is selected from native starches, flours, products resulting from etherification, esterification, sulphonation, oxidation and/or plastification, in particular from cationisation, hydroxyalkylation and/or acetylation, of the said starches and the said flours, and any mixes of at least two of the said products.

5. A process in accordance with claim 4, wherein the starchy material subjected to the fluidification stage consists of a cationic starch, possibly jointly bearing anionic groups.

6. A process in accordance with anyone of claims 1 to 5, wherein the starchy material is subjected, with a view to its fluidification, to the hydrolysing action of an inorganic acid, in particular hydrochloric acid or sulphuric acid, introduced at the rate of 0.01 to 0.4 % by weight, expressed as dry/dry with respect to the weight of starchy material.

7. A process in accordance with anyone of claims 1 to 6, wherein, after and/or during the fluidification stage, the starchy material is subjected to at least one subsequent and/or simultaneous stage of chemical modification, in particular etherification, esterification, sulphonation, oxidation or plastification, particularly cationisation, hydroxyalkylation or acetylation.

8. A process for the conversion of starchy material, comprising:
- a fluidification stage, in dry phase, of the said material, and
- a subsequent stage of cationisation, in dry phase, of the starchy material thus fluidified.

9. A process according to anyone of claims 1 to 8, wherein:
- the fluidification stage is carried out in such a way that the water fluidity (WF) of the obtained product is of at least 65, preferably of between 70 and 90, and
- the cationisation stage is carried out in such a way that the fixed nitrogen rate of the obtained product is of at least 0.30 % and less than 0.50 %, preferably of between 0.30 % and 0.48 %, expressed with respect to the dry weight of the obtained cationic starchy material.

10. A process according to anyone of claims 1 to 8, wherein:
- the fluidification stage is carried out in such a way that the water fluidity (WF) of the obtained product is of at least 50, approximately, preferably of between 65 and 90, and
- the cationisation stage is carried out in such a way that the fixed nitrogen rate of the obtained product is of at least 0.04 % and at most 0.12 % preferably of between 0.05 % and 0.10 %, with respect to the dry weight of the obtained cationic starchy material.

11. A process according to anyone of claims 1 to 8, wherein the starchy material is a corn or potato starch and wherein
- the fluidification stage is carried out in such a way that the water fluidity (WF) of the obtained product is of at least 65 approximately, preferably of between 70 and 90, and
- the cationisation stage is carried out in such a way that the fixed nitrogen rate is of between 0.20 and 2 %, preferably of between 0.22 and 1 %, expressed with respect to the dry weight of the obtained cationic starchy material.
